(19) **Europäisches Patentamt / European Patent Office / Office européen des brevets**

(11) **EP 3 968 562 A1**

(12) **EUROPEAN PATENT APPLICATION**
published in accordance with Art. 153(4) EPC

(43) Date of publication:
**16.03.2022 Bulletin 2022/11**

(21) Application number: **20802540.3**

(22) Date of filing: **13.02.2020**

(51) International Patent Classification (IPC):
**H04L 7/00** $^{(2006.01)}$     **H04L 12/70** $^{(2013.01)}$

(52) Cooperative Patent Classification (CPC):
**H04L 7/00**

(86) International application number:
**PCT/JP2020/005572**

(87) International publication number:
**WO 2020/225954 (12.11.2020 Gazette 2020/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.05.2019 JP 2019088847**

(71) Applicant: **Hitachi, Ltd.**
**Tokyo 100-8280 (JP)**

(72) Inventors:
• **MARUYAMA Tatsuya**
**Tokyo 100-8280 (JP)**

• **KIDO Mitsuyasu**
**Tokyo 100-8280 (JP)**
• **YOSHIDA Shoji**
**Tokyo 100-8280 (JP)**
• **TAKAMI Kazuhisa**
**Tokyo 100-8280 (JP)**
• **ENDO Takamichi**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **COMMUNICATION CONTROL DEVICE AND COMMUNICATION CONTROL METHOD**

(57)     In the related art, since there is a difference in communication delay time in a round-trip communication path due to packet clogging in a network configuration using a network relay device, there is a problem that time cannot be synchronized. In order to solve the above problem, in the present invention, a time synchronization unit 131 is controlled by the time synchronization control unit 130 to perform time synchronization once, delays of an egress path and an ingress path of the time packet on the basis of the synchronization time are calculated, and time synchronization processing is executed using a time of the time packet in a case where the calculated values are equal to each other.

*FIG. 3*

EP 3 968 562 A1

**Description**

Technical Field

The present invention relates to an information processing apparatus, information processing hardware, and information processing software related to communication in a network. Among them, the present invention particularly relates to a technology for performing a communication control of a network including time synchronization.

Background Art

As an example of a technology using network communication, for example, there is a control system configured to be distributed. In this control system, it is necessary to perform communication control such as time synchronization and management of a communication traffic volume. For example, time synchronization between connection terminals may be required depending on an application to be realized. In the case of a distributed control system connected via a network, the time synchronization can be performed by transmitting and receiving time synchronization packets via the network.

For example, when a signal such as audio or video is transmitted to a remote place, it is common to digitize an analog signal. In this case, there is a method of executing code processing of a signal and decoding processing at the remote place using a common frequency. In such a system, a frequency used on a transmission side and a frequency used on a reception side need to be the same and stable. Therefore, frequency synchronization and time synchronization are required.

In addition, in a base station for wireless communication, handover can be smoothly executed as long as the frequency is stable between base stations such as routers and between the base station and a portable device. Therefore, synchronization between base stations is required.

In addition, examples of application of the time synchronization include fields of sensing and measurement, and fields such as an industrial manufacturing device, a power system protection control device, and an intelligent electronic device (IED).

Examples of the time synchronization scheme using the network include Network Time Protocol (NTP), Simple Network Time Protocol (SNTP), IEEE 1588, or the like.

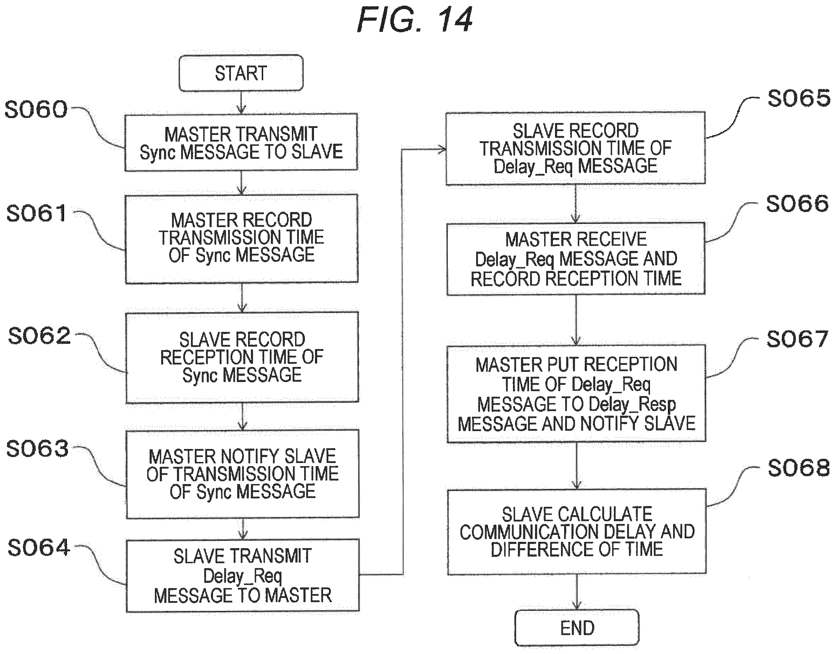

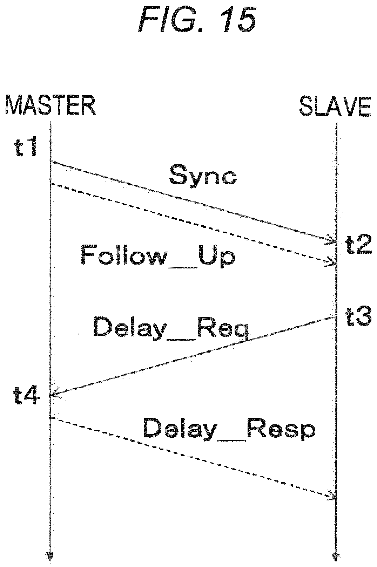

An execution procedure of the time synchronization protocol of IEEE 1588 will be described with reference to FIG. 14. FIG. 15 illustrates a communication sequence diagram that is message exchange in IEEE 1588.

IEEE 1588 has a master-slave configuration.

First, a master transmits a Sync message to a slave (S060).

In this case, the master records a transmission time t1 of the Sync message (S061).

When the slave receives the Sync message, the slave records a reception time t2 (S062).

The master notifies the slave of t1 by one of the following means (S063).

One is a method of storing information of t1 to the Sync message.

The remaining means is a method of storing information of t1 in a Follow_Up message subsequent to the Sync message.

Subsequently, the slave transmits a Delay_Req message to the master (S064).

In this case, the slave records a transmission time t3 of the Delay_Req message (S065).

When the master receives the Delay_Req message, the master records a reception time t4 (S066).

Then, the master puts information of t4 in the Delay_Resp message and notifies the slave of t4 (S067).

The slave that has received the Delay_Resp message calculates a communication delay and a time difference between the master and the slave from t1, t2, t3, and t4 (S068).

The calculation of the communication delay is based on the premise that the communication delay between the master and the slave is equal in a round-trip path. Therefore, calculation of a one-way communication delay td is expressed by the following Equation.

$$td = ((t4-t3) + (t2-t1))/2 \quad (Equation\ 1)$$

Moreover, a difference tdiff between the times of the master and the slave is expressed by the following equation.

$$tdiff = \{(t1 + t4)-(t2 + t3)\}/2 \quad (Equation\ 2)$$

With this tdiff, the slave synchronizes the time with the master. That is, time synchronization processing is performed using a difference between averages of transmission/reception times of the slave and the master as a delay time of the slave.

Citation List

Patent Literature

PTL 1: JP 2010-74600 A

Non Patent Literature

NPL 1: IEEE 1588 -2008 "IEEE Standard for a Precision Clock Synchronization Protocol for Networked Measurement and Control Systems"

Summary of Invention

Technical Problem

However, when a network is configured using a relay device such as a network switch, there is a problem that it is difficult to manage and operate the network. For example, there is a problem that synchronization accuracy decreases. IEEE 1588 is based on the premise that the time difference is known even when the delays of a time synchronization packet in the egress path and in the ingress path are equal or even if the delays are different.

When a network is shared among a plurality of connection terminals, time synchronization packets are queued in a network relay device such as a network switch, and there is a problem that the difference between the delay in egress path and the delay in ingress path fluctuates.

In NPL 1, it is possible to measure a transfer delay of a packet in a network device using a mechanism called an end-to-end transparent clock (TC) or a peer-to-peer transparent clock (TC). A difference between the delay in egress path and the delay in ingress path can be calculated by reflecting the measured transfer delay to data in the packet.

However, the end-to-end TC and the peer-to-peer TC have a problem that a dedicated function of acquiring a high-precision timestamp and updating information of a time synchronization packet is required.

In addition, an existing communication infrastructure already exists, and thus, it may be difficult to introduce a time-synchronization-compatible relay device such as the end-to-end TC or the peer-to-peer TC due to a new introduction cost, a construction period, difficulty in stopping an active communication system, or the like.

In addition, in PTL 1, a queuing delay in a network device is estimated by transmitting a plurality of delay estimation packets at a predetermined transmission interval and comparing an interval at which the packets are received with a predetermined transmission interval.

However, this method needs to be supported by both the master and the slave executing the time synchronization protocol. Therefore, it is difficult to configure with a connection terminal conforming to a standard. In addition, there is a problem that an effective communication band decreases due to consumption of a communication band by the delay estimation packet.

In addition, time synchronization is required for matching power data in order to implement monitoring including abnormality detection in a power network.

Furthermore, in the problem that it is difficult to manage and operate the network, it is also necessary to appropriately manage a communication traffic volume of the network. For example, when the communication traffic volume increases according to the delay of queuing in the network relay device, there is also a problem that monitoring data cannot be transmitted and received at an appropriate timing.

Solution to Problem

In order to solve the above problem, in the present invention, delays of an egress path and an ingress path of a time packet are calculated, whether the delays are substantially equal is determined, and a communication control is performed according to a determination result. The communication control includes implementation of a time synchronization protocol using a time of the time packet and a control of a communication traffic volume. In addition, "substantially equal" includes being within a range of a predetermined difference. Note that the execution of the time synchronization protocol includes that the times do not completely match as a result, and the time synchronization protocol, which is processing for synchronization, may be executed.

One of the features of the present invention includes periodically performing the communication control.

Advantageous Effects of Invention

Even when a network configuration using a network relay device is used, an appropriate communication control can be performed. As described above, the communication control includes processing for synchronizing the time between the information processing apparatuses and control of a communication traffic volume.

Brief Description of Drawings

[FIG. 1] FIG. 1 is a system configuration diagram using one embodiment of the present invention.
[FIG. 2] FIG. 2 is a hardware configuration diagram according to one embodiment of the present invention.
[FIG. 3] FIG. 3 is a functional configuration diagram according to one embodiment of the present invention.
[FIG. 4] FIG. 4 is a diagram illustrating an operation procedure of a time synchronization control unit 130 according to one embodiment of the present invention.
[FIG. 5] FIG. 5 is a diagram illustrating a reference delay update procedure of a reference delay storage unit 132 according to one embodiment of the present invention.
[FIG. 6] FIG. 6 is a diagram illustrating a calculation procedure (part 1) of a delay in an egress path according to one embodiment of the present invention.
[FIG. 7] FIG. 7 is a diagram illustrating a calculation procedure (part 1) of a delay in an ingress path according to one embodiment of the present invention.
[FIG. 8] FIG. 8 is a diagram illustrating the calculation procedure (part 2) of the delay in the egress path according to one embodiment of the present invention.
[FIG. 9] FIG. 9 is a diagram illustrating a calculation procedure (part 2) of the delay in the ingress path according to one embodiment of the present invention.
[FIG. 10] FIG. 10 is a communication sequence diagram of a synchronization packet using one embodiment of the present invention.
[FIG. 11] FIG. 11 is a diagram illustrating an execution procedure for improving accuracy of a minimum delay according to one embodiment of the present invention.
[FIG. 12] FIG. 12 is a diagram illustrating an effect in one embodiment of the present invention.
[FIG. 13] FIG. 13 is a diagram illustrating an execution procedure for improving minimum delay accuracy using a reception interval according to one embodiment of the present invention.
[FIG. 14] FIG. 14 is a diagram illustrating a procedure of a time synchronization protocol in IEEE 1588.
[FIG. 15] FIG. 15 is a synchronization packet communication sequence diagram in IEEE 1588.

Description of Embodiments

Hereinafter, as one embodiment of the present invention, Embodiment 1 to 3 related to a communication control apparatus connected to a communication apparatus via a network relay device will be described.

Embodiment 1

(System Example)

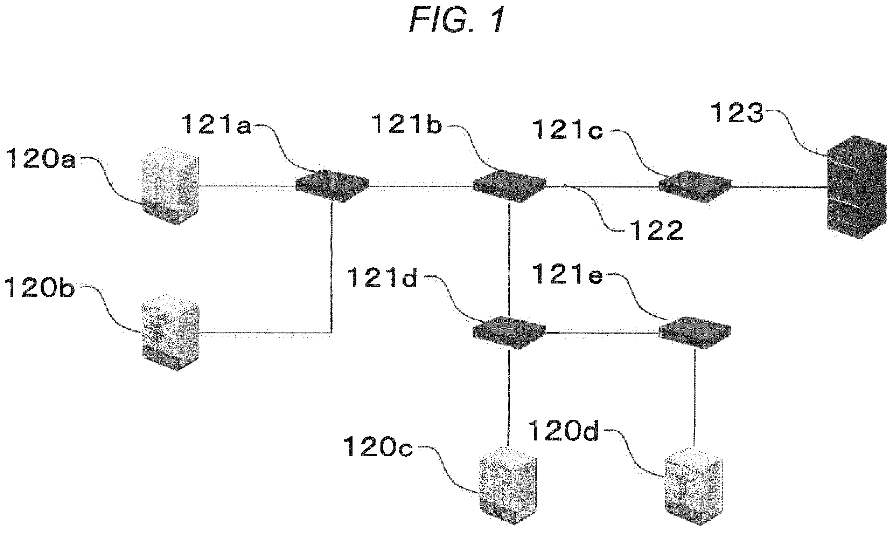

FIG. 1 is a system example configured using a communication control apparatus 120 to which the present embodiment is applied.
The communication control apparatus 120 is connected to and communicates with another network relay device 121 or a communication apparatus 123 via a network 122.
Examples of the network relay device 121 of the present embodiment include various network relay devices such as a network switch including an L3 switch, a bridge, a router, transparent clock (TC) and boundary clock (BC) of IEEE 1588, a switch L2 switch capable of rewriting packet route control in a software defined network, an OpenFlow switch, RedBox defined by IEC 62439-3, QuadBox, an optical switch, an optical multiplexer, and an optical splitter.
In addition, the network 122 of the present embodiment includes various industrial networks including a control network defined by IEEE 802.3 (Ethernet), IEC61784, Communication Profile Family 12 (Hereinafter, EtherCAT (registered trademark)) of IEC61784-2, and IEC 61158, an IEEE communication standard group related to Time Sensitive Networking (TSN), Distributed Network Protocol (DNP) 3, IEC 61970, High availability Seamless Ring (HSR) and Parallel Redundancy Protocol (PRP) in IEC 62439-3, a ring network, an IEEE 802.17 RPR method, Controller Area Network (CAN), DeviceNet, RS-232C, RS-422, RS-485, ZigBee (registered trademark), Bluetooth (registered trademark), IEEE 802.15, IEEE 802.1, mobile communication, OpenADR, ECHONET Lite (registered trademark), OpenFlow (registered trademark), and the like.

Hereinafter, the communication control apparatus 120 will be described as a slave executing time synchronization to the time of a master in IEEE 1588, and the communication apparatus 123 will be described as the master. Note that the communication control apparatus 120 and the communication apparatus 123 only need to communicate with each other. In addition, processing of the communication control apparatus 120 described below may be executed by the communication apparatus 123, and aspects in which the communication control apparatus 120 and the communication apparatus 123 are referred to as a communication apparatus or a communication control apparatus are also included in the present embodiment.

(Hardware Configuration)

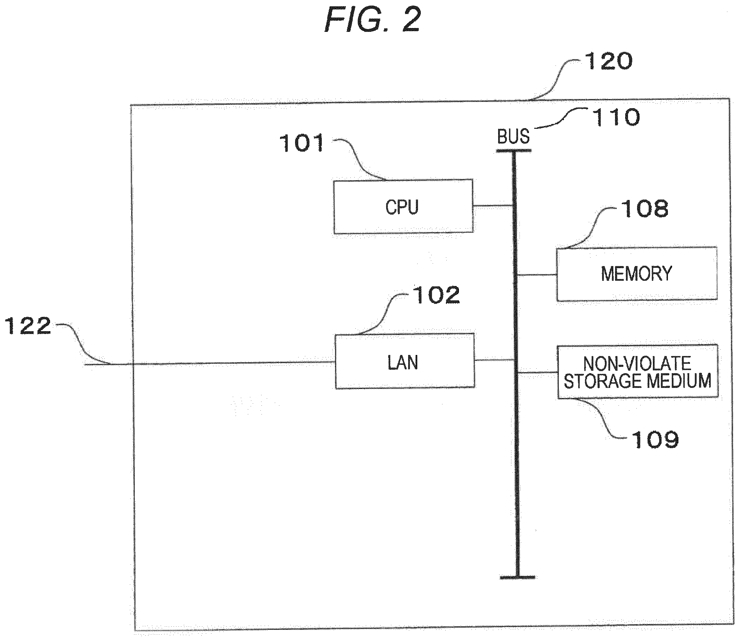

FIG. 2 is a hardware configuration of the communication control apparatus 120 to which the present embodiment is applied.

A CPU 101 transfers a program from a non-volatile storage medium 109 to the memory 108 and executes the program. Examples of the execution processing program of the present embodiment include an operating system (hereinafter, referred to as OS) and an application program running on the OS.

An LAN 102 is a transceiver IC having a communication function with the network 122.

The LAN 102 receives a communication request from a program running on the CPU 101 and communicates with the network 122. Examples of implementation of the LAN 102 include ICs such as a media access control (MAC) chip, a physical layer (PHY) chip, a composite chip of MAC and PHY, FPGA, CPLD, ASIC, and gate array compliant with the IEEE802.3 standard. Note that the LAN 102 may be included in the CPU 101 or a chip set that controls an information path inside the computer.

Note that the LAN 102 may have a time measurement function defined in IEEE 1588 or the like. This is a function of measuring a timestamp when a predetermined time synchronization packet is transmitted or received.

A function of storing the measured timestamp in the packet may be included.

The memory 108 is a temporary storage area for the CPU 101 to operate, and stores the OS, the application program, and the like transferred from the non-volatile storage medium 109.

The non-volatile storage medium 109 is an information storage medium, and is used for storing an OS, an application, a device driver, or the like, a program for operating the CPU 101, and a result of execution of the program. Examples of the non-volatile storage medium 109 of the present embodiment include a hard disk drive (HDD), a solid state drive (SSD), and a flash memory.

In addition, the non-volatile storage medium 109 of the present embodiment includes an external storage medium that is easier to remove. Examples thereof include use of a floppy disk (FD), a CD, a DVD, Blu-ray (registered trademark), a USB memory, and a compact flash (registered trademark).

The CPU 101, LAN 102, memory 108, and non-volatile storage medium 109 are connected to a bus 110 of the present embodiment. Examples of the bus 110 include a PCI bus, an ISA bus, a PCI Express bus, a system bus, and a memory bus.

(Description of Each Functional Unit)

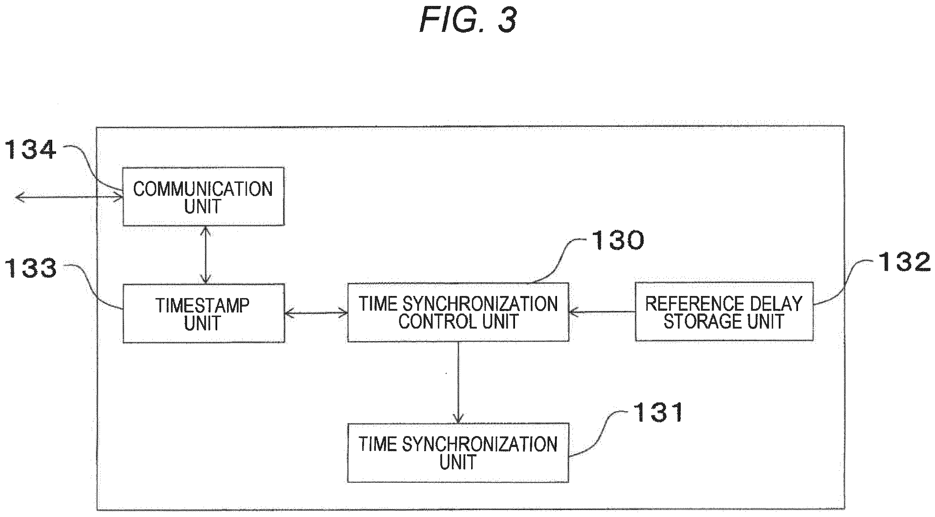

FIG. 3 illustrates a functional configuration diagram of the communication control apparatus 120 to which the present embodiment is applied. A time synchronization control unit 130 is a functional unit that executes time synchronization processing. Examples of a time synchronization protocol included in the time synchronization processing include IEEE 1588, NTP, and SNTP. The time synchronization control unit 130 determines whether to update a synchronization time estimation method and an estimation equation of a time synchronization unit 131. For this purpose, a time measured by a timestamp unit 133, a reference delay held in a reference delay storage unit 132, and the estimated synchronization time or parameters necessary for calculating the synchronization time notified from the time synchronization unit 131 are used.

The time synchronization control unit 130 may be realized by the CPU 101 or an application that operates on the CPU 101, or may be realized as hardware logic in a case where the LAN 102 is configured by an FPGA or a CPLD. Alternatively, both the software on the CPU 101 and the LAN 102 may be used. In this case, the LAN 102 processes a packet transmission timing, a packet reception timing measurement function, or packet format generation.

The time synchronization unit 131 sets a parameter on the basis of information obtained by a network time synchronization protocol executed by the time synchronization control unit 130 and manages a time synchronized with the master.

The time synchronization unit 131 may be implemented by the CPU 101 or an application that operates on the CPU 101, or may be implemented as hardware logic included in the LAN 102.

The reference delay storage unit 132 holds a reference delay used by the time synchronization control unit 130 to determine whether to execute a time synchronization control. The reference delay may be dynamically calculated by acquiring timestamps measured by the timestamp unit 133 or a timestamp on a time synchronization packet, or may be calculated in advance from network configuration information and input.

The reference delay storage unit 132 is exemplified by using the memory 108 and the non-volatile storage medium 109.

The timestamp unit 133 measures the timing at which the packet for time synchronization passes through the timestamp unit 133 or is transmitted and received by a communication unit 134 and the time synchronization unit 131. In addition, a measured timestamp is stored in the time synchronization packet.

The timestamp unit 133 may be implemented by the CPU 101 or an application that operates on the CPU 101, or may be implemented as hardware logic included in the LAN 102.

The communication unit 134 is a function of transmitting and receiving a predetermined packet in a communication protocol. The communication unit 134 also has a function of controlling a communication traffic volume in accordance with a difference in delay time between an egress path and an ingress path.

(Operation Procedure)

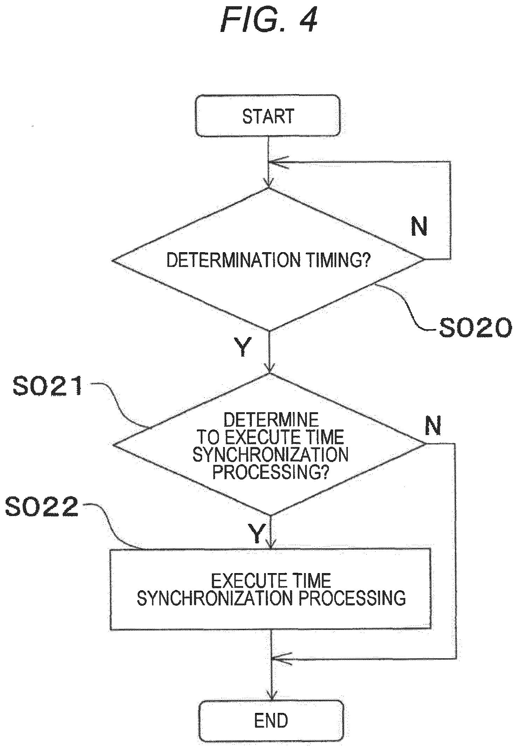

Next, an operation procedure of the time synchronization control unit 130 is illustrated in FIG. 4.

First, the time synchronization unit 131 is controlled to determine whether it is time to execute the time synchronization processing (S020). This may be performed even when a timer detects a predetermined time, after reception of the Sync message in S062 of FIG. 14 and FIG. 15, or after reception of the Delay_Resp message in S068 of FIG. 14 and FIG. 15. In addition, as illustrated in Equations 1 and 2, in a case where timestamps or delays of the egress path and the ingress path are used, it may be determined that it is the determination timing when the parameters have been acquired or when the parameters have been calculated.

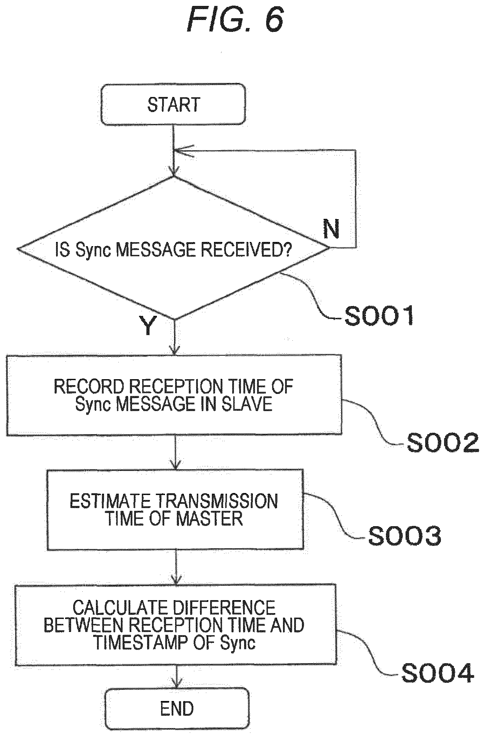

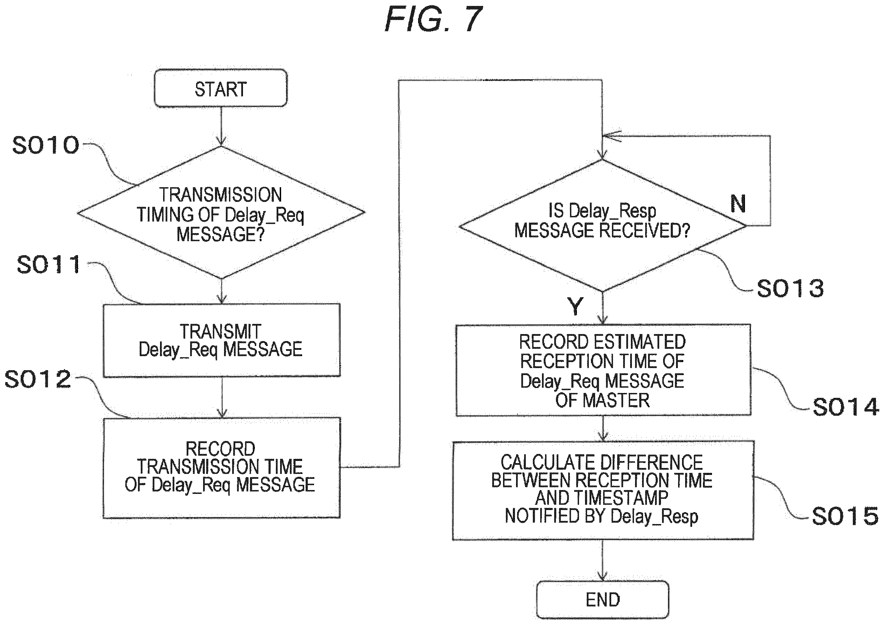

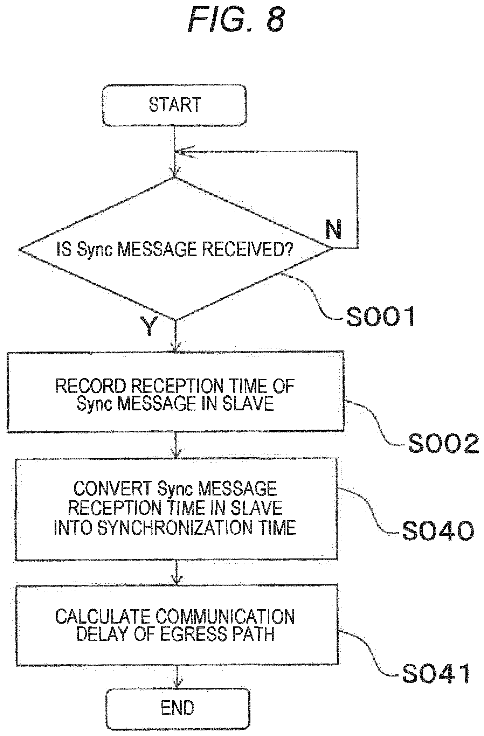

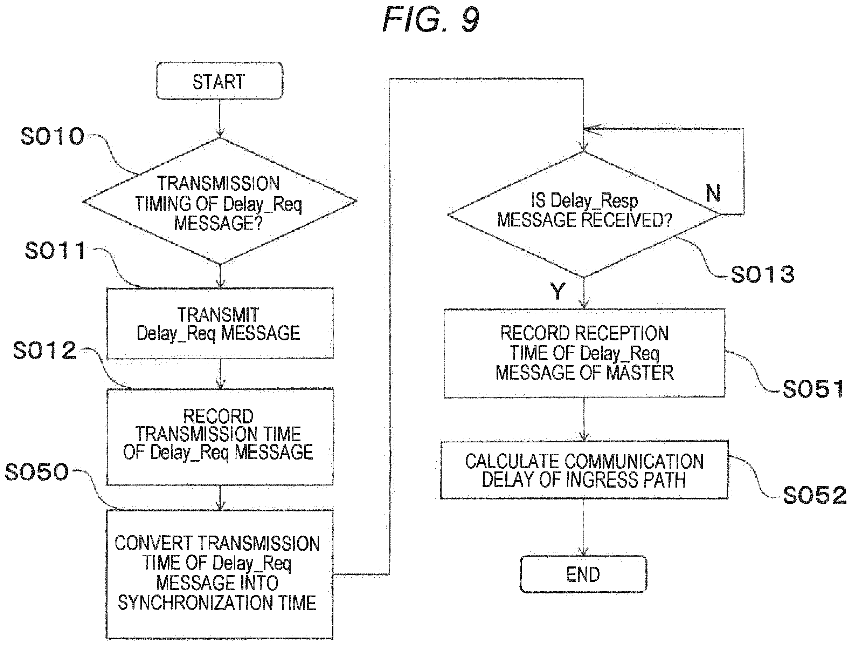

Next, it is determined whether to control the time synchronization unit 131 (S021). Details of the determination method will be described below. When determining to execute the time synchronization processing in S021 (Y in S021), the time synchronization control unit 130 controls the time synchronization unit 131 to execute the time synchronization processing (S022). The time synchronization processing includes a delay calculation of the egress path (FIGS. 6 and 8), a delay calculation of the ingress path (FIGS. 7 and 9), and execution of a time synchronization protocol based on calculation of a difference between the delays of the egress path and the ingress path (FIG. 14, 15, Equation 2). This includes updating the parameter of the estimation equation of the synchronization time included in the time synchronization unit 131. In addition, the synchronization time realized by the software timer or the hardware timer is internally changed, or the advance of the time for a predetermined period is adjusted in order to avoid a discontinuous time change. Note that this time synchronization processing includes, as a result, that the times are not completely synchronized (matched) after the processing, and may be substantially synchronized. This allows the present processing to include processing for synchronization. In addition, this S022 is performed periodically, and includes a periodic period.

When it is determined in S021 that the time synchronization is not controlled, that is, the time synchronization processing is not executed (N in S021), the process ends as it is.

(Control Determination of Time Synchronization: Minimum Delay)

As a method of determining whether to control the time synchronization unit 131 in S021, a method of calculating a delay between the master and the slave and determining to control the time synchronization unit 131 in a case where the delay is a minimum value is exemplified. This i-s based on the idea of determining that no time synchronization packet is delayed due to queuing in the network relay device 121 on the communication path when the delay is the minimum delay.

(Reference Delay Update: Minimum Delay)

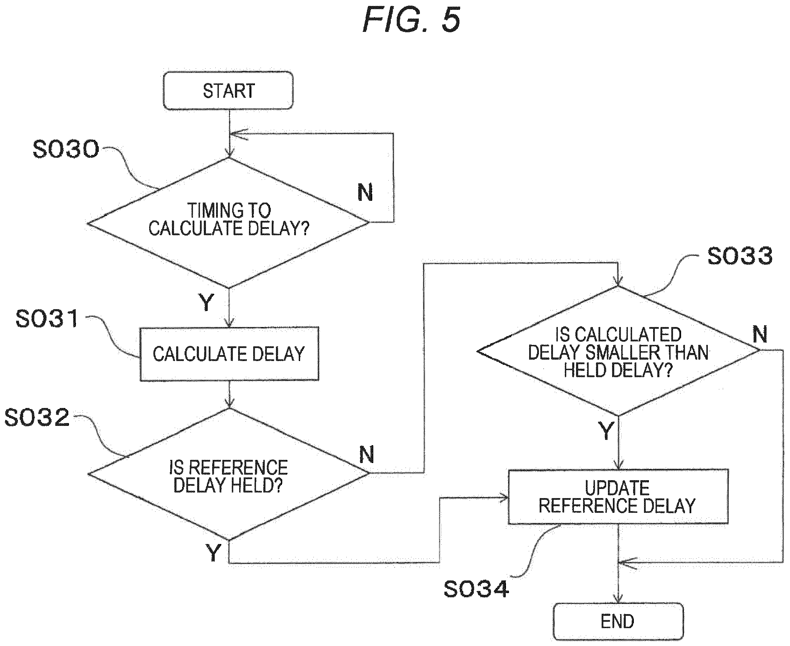

FIG. 5 illustrates update of the reference delay of the reference delay storage unit 132 by the minimum delay constituting a part of the time synchronization processing S022.

First, it is determined whether it is a timing to calculate a delay (S030). This is exemplified by the timing of reception of the Delay_Resp message illustrated in S068 of FIG. 14 and FIG. 15 and the timing of reception of the Sync message in S062 of FIG. 14 and FIG. 15. In addition, parameters necessary for delay calculation need to be prepared.

Next, the delay is calculated by the procedure of Equation 1 (S031). Next, the reference delay storage unit 132 determines whether the reference delay is held (S032). When the reference delay is held (Y in S032), it is determined whether the delay calculated in S031 is smaller than the delay held in the reference delay storage unit 132 (S033). If the delay is smaller than the delay held in the reference delay storage unit 132 (Y in S033), the delay calculated in S031 is set as the reference delay (S034).

In S033, when the delay calculated in S031 is not smaller than the delay held in the reference delay storage unit 132 (N in S033), the process ends as it is.

When the reference delay is not held in S032 (N in S032), the delay calculated in S031 is set as the reference delay (S034).

By way of example, the time synchronization is controlled in S021 (step of controlling the time synchronization unit 131) in FIG. 4 with the update of the reference delay (S034) in FIG. 5.

(Control Determination of Time Synchronization Unit 131: Delay of Egress Path and Ingress Path)

Alternatively, in the determination as to whether the time synchronization control unit 130 controls the time synchronization unit 131, the time synchronization may be controlled in a case where estimated delays of the egress path and the ingress path are substantially equal to each other. In other words, this means that the time synchronization is controlled when the queuing delay by the network relay device 121 on the network 122 is equal between the egress path and the ingress path. A determination procedure of the time synchronization control unit 130 by this method, that is, a calculation procedure of the delay in the egress path and the ingress path is illustrated in FIGS. 6 and 7. The components form a part of the time synchronization processing S022.

FIG. 6 illustrates a procedure for calculating the delay of the egress path.

First, reception of the Sync message is waited (S001). Next, a reception time of the Sync message is recorded (S002). Next, a transmission time of the Sync message in the master is estimated (S003). Then, a difference between the timestamp stored in the Sync message and the transmission time of the Sync message estimated in S003 is obtained, and a delay generated on the network of the egress path is calculated.

The estimation of the transmission time of the Sync message in S003 is exemplarily calculated based on the calculation of the synchronization time in the time synchronization unit 131 and the reference delay held in the reference delay storage unit 132.

For example, it is assumed that a synchronization time Tsys in the time synchronization unit 131 is calculated by the following Equation.

$$\mathtt{Tsys = a \times TL + b} \text{ (Equation 3)}$$

Here, TL is a local time which is a time of the slave itself, and a and b are coefficients. It is assumed that a and b are calculated in the procedures of FIGS. 14 and 15.

In this case, the transmission time TM_Sync of the Sync message in the master is estimated by the following Equation using Equation 3 and the minimum delay dmin.

$$\mathtt{TM\_Sync = Tsys\_s\_Sync - dmin}$$

$$\mathtt{= a \times TL\_s\_Sync + b\text{-}dmin} \text{ (Equation 4)}$$

Here, Tsys_s_Sync is a time indicating the reception time of the Sync message in the slave by the synchronization time, and TL_s_Sync is a time indicating the reception time of the Sync message in the slave by the local time.

FIG. 7 illustrates a procedure (part 1) of calculating the delay on the ingress path.

In FIG. 7, first, a timing of transmitting the Delay_Req message is waited (S010). This is exemplified to be executed after a predetermined time elapses after the Sync message is received.

Next, the Delay_Req message is transmitted (S011). At that time, the transmission time of the Delay_Req message is recorded (S012). Thereafter, the reception of the Delay_Resp message is waited (S013). When the Delay_Resp message is received (Y in S013), the reception time of Delay_Req in the master is estimated and recorded (S014). Thereafter, the reception time of the master Delay_Req estimated in S014 is subtracted from the timestamp notified by the Delay_Resp message, and the difference therebetween is calculated (S015).

The estimation of the reception time of the Delay_Req message in S014 is calculated on the basis of the synchronization time in the time synchronization unit 131 and the reference delay stored in the reference delay storage unit 132.

The reception time TM_Dreq of the Delay_Req message in the master is estimated by the following equation using Equation 3 and the minimum delay dmin.

$$TM\_Dreq = Tsys\_s\_Dreq + dmin$$

$$= a \times TL\_s\_Dreq + b + dmin \quad (Equation\ 5)$$

Here, Tsys_s_Dreq is a time indicating the transmission time of the Delay_Req message in the slave by the synchronization time, and TL_s_Dreq is a time indicating the transmission time of the Delay_Req message in the slave by the local time.

(Summary When Egress Path and Ingress Path Are Equal)

According to the procedures of FIGS. 6 and 7 described above, when the delay generated on the network in the egress path is substantially equal to the delay in the ingress path, the time synchronization protocol is executed in the procedures of FIGS. 14 and 15 and Equation 2 using a timestamp acquired during this time.

In the procedures of FIGS. 6 and 7, the occurrence delay on the network is calculated and determined, but the delay between the master and the slave may be simply estimated and compared. The delay calculation procedure is illustrated in FIGS. 8 and 9.

FIG. 8 is a flowchart illustrating calculation of a delay in the egress path.

A difference from FIG. 6 is that a Sync message reception time in the slave is converted into a synchronized time (S040) instead of S003 and S004. In addition, there is also a difference in calculating a difference between the timestamp on the Sync message (the transmission time of the Sync message of the master) and the reception time of the Sync message in the slave in S040 to calculate the communication delay of the egress path (S041).

FIG. 9 is a flowchart illustrating a procedure for calculating a delay on the ingress path.

A difference from FIG. 7 is that the transmission time of the Delay_Req message is converted into the synchronized time (S050) after S012. Furthermore, the difference is that the reception time of the master Delay_Req message is acquired by the Delay_Resp message instead of S014 and S015 (S051). Furthermore, the difference is that a difference from the transmission time of the Delay_Req message in S050 is calculated to calculate the communication delay on the ingress path (S052).

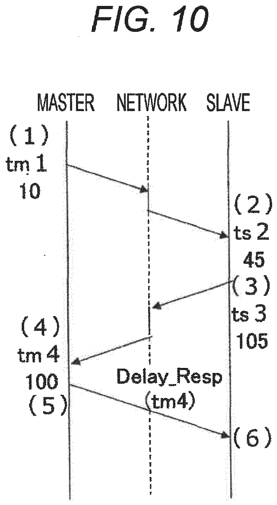

This procedure will be described more specifically with reference to the communication sequence diagram of the time synchronization packet in FIG. 10.

In this example, it is assumed that the slave has once been subjected to the time synchronization processing and the time offset -20 has been acquired. In the case of the procedures of FIGS. 6 and 7, it is assumed that the minimum delay that is the reference delay is 5. A process of calculating a time offset between the master and the slave from the timestamps acquired by the master and the slave will be described.

In (1) of FIG. 10, the master transmits a Sync message. In this case, the master transmission time is tm1 = 10, and this is stored as the timestamp on the Sync message. This message is received by the slave after the delay on the network in (2) of FIG. 10.

The reception time at the local time in the slave at this time is set to 45 (corresponding to S002 in FIG. 6). When the time offset -20 is added to this to obtain the synchronization time, ts2 = 25 is obtained.

At the same time, the timestamp of 10 on the Sync message is acquired.

In the procedure of FIG. 6, the transmission time of the Sync message of the master is estimated. The reference delay of 5 is subtracted from the calculated synchronization time tsys2 = 25, and 20 is calculated as the transmission time of the Sync message by the master (corresponding to S003 in FIG. 6). A difference between this and 10 of the timestamp on the Sync message is obtained as 10 (corresponding to S004 in FIG. 6). This is a delay on the network in the egress path.

In the procedure of FIG. 8, the master transmission time is subtracted from the slave reception time (synchronization time) to obtain 25-10 = 15 (S041 in FIG. 8) .

Next, in (3) of FIG. 10, the Delay_Req message is transmitted (corresponding to S011 of FIG. 7). It is assumed that the transmission time at this time is ts3 = 105 as the local time. The time offset of -20 is added thereto to obtain the synchronization time, which is 85. Thereafter, in (4) of FIG. 10, the master receives the Delay_Req, and the time is tm4 = 100. This is transmitted in the Delay_Resp message in (5) of FIG. 10, and is received by the slave in (6) of FIG. 10.

In the procedure of FIG. 7, the reference delay of 5 is added to the transmission time 85 (synchronization time) of the Delay_Req message in the slave, and 90 is calculated as the reception time of the Delay_Req message in the master. A difference between the calculated time and 100 of the timestamp on the Delay_Resp message is obtained as 10 (S015 in FIG. 7). This indicates a delay of the network on the ingress path.

In the procedure of FIG. 9, the slave transmission time (synchronization time) is subtracted from the master reception time to obtain 100 -85 = 15 (S052 in FIG. 9).

Note that, in the procedures of FIGS. 6, 7, 8, and 9, the two-step method of IEEE 1588 may be employed and the transmission time of the Sync message of the master may be acquired from a Follow_Up message.

In the procedures of FIGS. 6 and 7, the delay on the network is 10, and in the procedures of FIGS. 8 and 9, the delay on the ingress path and the egress path is 15. Since both are equal, the time synchronization protocol is executed according to Y in S021 in FIG. 4. Specifically, the processing is executed by controlling the time synchronization of the time synchronization unit 131 using tml, ts2, ts3, and tm4 in FIG. 10.

$$\texttt{tdiff} = \{(\texttt{tm1} + \texttt{tm4}) - (\texttt{ts2} + \texttt{ts3})\}/2$$

$$= \{(10 + 100) - (45 + 105)\}/2$$

$$= -20$$

As a result, the time offset is obtained as -20. Here, a case where evaluation values of the egress path and the ingress path are equal to each other has been described, but the time synchronization of the time synchronization unit 131 may be controlled when the evaluation values are substantially equal to each other or a difference between the evaluation values is within a predetermined threshold value. As a method of determining the threshold value, the threshold value may be determined based on a target synchronization accuracy error. As an example, since the difference between the delays in the egress path and the ingress path is equal to twice the achievable synchronization accuracy error, twice the target synchronization accuracy may be used as the threshold value. Alternatively, there is a possibility that an error due to variation in physical accuracy inherent in a crystal oscillator that controls the time of the communication control apparatus 120 or the communication apparatus 123 is accumulated for the time from the Sync transmission of tm1 to the Delay_Req reception of tm4. Therefore, a value obtained by subtracting the worst value of the error caused by an accuracy variation of the crystal oscillator from the target accuracy error at a time obtained by subtracting tm1 from tm4 may be used as the threshold value.

For example, in a case where tm4-tm1 is 1 millisecond and the accuracy variation of the crystal oscillator is ±50 ppm, the variation is 100 ppm at the maximum, and thus the error is calculated as 1 millisecond × 100 ppm = 100 nanoseconds.

For example, when the target accuracy is 5 microseconds, the threshold value is set to 4.9 microseconds (5 microseconds - 100 nanoseconds).

The target accuracy is determined by the requirements of the target control system. For example, in a protection control device of a power system, the synchronization accuracy between the protection control devices is defined in consideration of a control operation until the protection control device detects a system fault and controls circuit breakers.

Note that the threshold value may be changed with a lapse of time. A synchronization error accumulates as time elapses after the communication control apparatus 120 and the communication apparatus 123 are synchronized. Therefore, it is exemplified that the threshold value is reduced according to the lapse of time after the synchronization, and the time synchronization protocol is executed in a case where the measured delays of the egress path and ingress path are closer. In this way, the synchronization accuracy between the communication control apparatus 120 and the communication apparatus 123 can be maintained according to the synchronization deviation with the lapse of time.

Note that a degree of change in the threshold value is determined on the basis of accuracy of a clocking device such as the crystal oscillator used in the communication control apparatus 120 and the communication apparatus 123, for example.

Note that a method of multiplexing domains in one communication apparatus 123 and communicating with the communication control apparatus 120 may be configured with a route control information of the network relay device 121 (for example, switching the route for each domain). In addition, a domain number on an IEEE 1588 packet may be identified in the communication apparatus 123.

(Estimation of Minimum Delay, Statistic)

When the reference delay is updated to the minimum delay and the minimum delay is updated in the procedure of FIG. 5, it is not known whether the delay calculated in S031 of FIG. 5 is truly the minimum delay in the network 122.

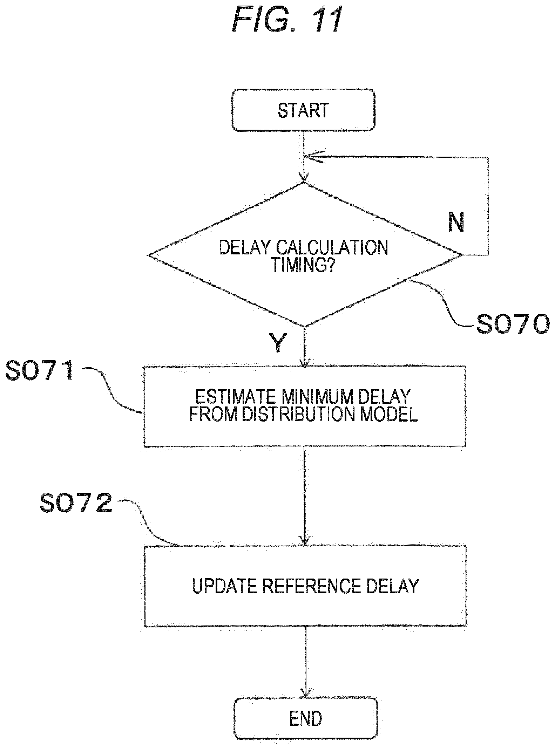

Note that a method of performing estimation based on a predetermined distribution model will be exemplified as a method of improving the accuracy of determination as to whether the delay is the minimum delay. This is illustrated in FIG. 11.

First, it is determined whether it is a delay calculation timing (S070). This is exemplified by whether a sufficient number of measurements that can approximate a predetermined distribution model has been acquired in addition to the determination criteria similar to S030 in FIG. 5. Next, a model of the statistical distribution is estimated, and the minimum value in the estimated distribution is calculated (S071). Examples of the distribution model include a Gaussian distribution and a beta distribution.

Note that this calculation may be applied to S031 in FIG. 5. Then, the reference delay is updated (S072). The reference to be updated may be the delay calculated in S071 of FIG. 11 or the value calculated in S031 of FIG. 5. Alternatively, any smaller value may be used.

(Estimation of Minimum Delay, Reception Interval)

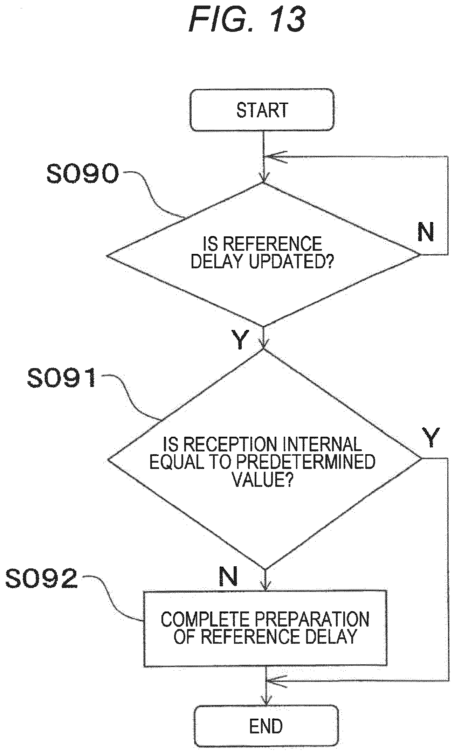

Next, a method for improving accuracy of determination as to whether the delay is the minimum delay on the basis of a reception interval of the packet in the communication control apparatus 120 will be exemplified. This is illustrated in FIG. 13. This utilizes a property that a certain interval specified in a communication standard is provided as a reception interval (transmission interval) when packet queueing occurs.

First, the processing waits until the reference delay is updated by the procedure of FIG. 5 or the like (S090). When the reference delay is updated (Y in S090), next, it is determined whether the reception interval between the time synchronization packet and the preceding packet is equal to the predetermined threshold value (S091). Here, the time synchronization packet indicates the Sync message in the egress path, and when received by the communication control apparatus 120, a reception interval to a packet (not limited to a packet of IEEE 1588) preceding the Sync message is set as a target. In the ingress path, a reception interval to a packet (not limited to the IEEE 1588 packet) preceding a Delay_Req message when the communication apparatus 123 receives the Delay_Req message is set as a target. Since the determination in FIG. 13 is executed by the communication control apparatus 120, the communication apparatus 123 may measure the reception interval between the Delay_Req message and the preceding packet in the ingress path and notify the communication control apparatus 120 of the reception interval. Next, the communication apparatus 123 may notify the communication control apparatus 120 of the determination result in S091.

These reception intervals are compared with a predetermined threshold value based on an inter-frame gap. In the IEEE 802.3 standard, the inter-frame gap is defined as 96 bit time. This corresponds to 960 nanoseconds at 100 Mbps and 96 nanoseconds at 1 Gbps. When the reception interval is equal to the threshold value based on the inter-frame gap (Y in S091); the process ends, and when the reception interval is not equal to the threshold value based on the inter-frame gap (N in S091), the preparation for the reference delay is completed (S092). This is because, in the network relay device 121 on the communication system, when the time synchronization packet is delayed due to queuing, the transmission interval (that is, the reception interval in the communication control apparatus 120) to the preceding packet should be the inter-frame gap. In a case where the delay due to queuing occurs, it is considered that the calculated delay is not the minimum delay, and thus, the reference delay is not set to be ready, and the processing is terminated. In this case, the process may return to start processing.

Note that the threshold value may change depending on a measurement point of the reception interval or a transmission function of the communication IC. For example, in a case where a time after reception of a preamble of the time synchronization packet is measured from an end of the preceding frame, a processing time of the preamble is added in addition to the inter-frame gap. Furthermore, in a case where the communication IC used in the communication control apparatus 120 can continuously transmit packets in a time shorter than 96 bit time, the time is the threshold value.

The result of whether the preparation for the reference delay is completed in S092 in FIG. 13 can be used for the control of the time synchronization in S021 in FIG. 4. Even when the calculated reference delay is the minimum value, in a case where it is considered that the preparation is not completed by the procedure of FIG. 13, the time synchronization is not controlled in S021 of FIG. 4.

Even in a case where the preparation for the reference delay is completed in S092 of FIG. 13, when a network environment or a communication path between the communication control apparatus 120 and the communication apparatus 123 changes, the preparation state for the reference delay is reset to an incomplete state.

These environmental changes are detected by use of SNTP or a routing protocol for acquiring the state of the network or by explicit notification, instruction, or setting by an operator.

(Synchronization: Minimum Delay)

In order to perform the time synchronization processing using the procedures illustrated in FIGS. 6, 7, 8, 9, and 10, it is necessary to be able to measure the delays of the egress path and the ingress path, and this is on the assumption that the time synchronization is performed once in advance.

In order to perform the time synchronization in advance, the time synchronization unit 131 may be controlled when the minimum delay illustrated in FIG. 5 is measured.

(Synchronization: GNSS)

As performing the time synchronization in advance, performing time synchronization processing on each of the communication control apparatuses 120 and the communication apparatuses 123 using a global navigation satellite system (GNSS) will be exemplified below.

Examples of the GNSS include a global positioning system (GPS), a quasi-zenith satellite system, Galileo, and the like.

When these GNSSs are always effective, the communication control apparatus 120 and the communication apparatus 123 can be appropriately synchronized. However, the present embodiment is effective in a case where an abnormality or a failure of a satellite system, or a surrounding environment of the communication control apparatus 120 and the communication apparatus 123 changes, and an upper portion is temporarily blocked.

(Static Routing)

Note that, in the present embodiment, in order to focus on the communication delay of the egress path and the ingress path, it is desirable that the communication paths of the egress path and the ingress path be the same. Therefore, the present embodiment also includes setting routing of the network relay devices 121 so that communication paths of the egress path and the ingress path are substantially the same.

(Intentional Communication Flow)

In the present embodiment, in consideration of the queuing delay in the network relay device 121, the time synchronization protocol is executed in a case where the delays of the egress path and the ingress path are equal within a predetermined threshold range. Therefore, the communication flow may be controlled to increase the delay in the other path when the delay in one path is temporarily large after the measurement of the delays in the egress path and the ingress path.

In FIG. 1, time synchronization processing for a communication control apparatus 120a and the communication apparatus 123 will be described in the following example. A case where the delay in the egress path (communication direction from the communication control apparatus 120a to the communication apparatus 123) is large and the delay in the ingress path (communication direction from the communication apparatus 123 to the communication control apparatus 120a) is relatively small will be described as an example. In such a case, the communication control apparatus 120a detects that the delay of the ingress path is relatively small, and requests the communication control apparatus 120c or the communication control apparatus 120d to generate the communication flow. In response to this, when the communication control apparatus 120c or the communication control apparatus 120d generates communication for the communication control apparatus 120a, it is possible to increase the delay of the ingress path from the communication apparatus 123 to the communication control apparatus 120a. Therefore, it can increase the possibility that the delays of the egress path and the ingress path are substantially equal within a predetermined range.

In this case, the contents of the request from the communication control apparatus 120a to the communication control apparatus 120c and the communication control apparatus 120d include a request for an increase in communication, a destination (in this case, the communication control apparatus 120a), and a degree of communication to be generated (based on a delay difference between the egress path and the ingress path).

For example, a communication traffic volume corresponding to the increase amount according to a detected delay difference is increased using data indicating a relationship between a delay difference and an increase amount set in advance. In this case, dummy data that is not originally necessary may be transmitted.

Regarding the increase amount, not only the data indicating the relationship is used as it is, but also a limitation may be provided when the reference delay and the minimum delay are used. In a case where the reference delay or the minimum delay is used, when the communication traffic volume increases, the delay increases, and it may not satisfy the reference delay or the minimum delay, that is, the time synchronization processing cannot be started. Therefore, when the communication traffic volume is increased, the reference delay or the minimum delay may be increased or the increase in the communication traffic volume may be suppressed by increasing the communication traffic volume within a certain range.

In addition, conversely, reducing the communication traffic volume to relatively reduce the delay difference is also included in the present embodiment.

In this way, the time synchronization processing can be performed on the communication control apparatus 120a and the communication apparatus 123 based on the present embodiment.

(Effect: Increase in Synchronization Opportunity)

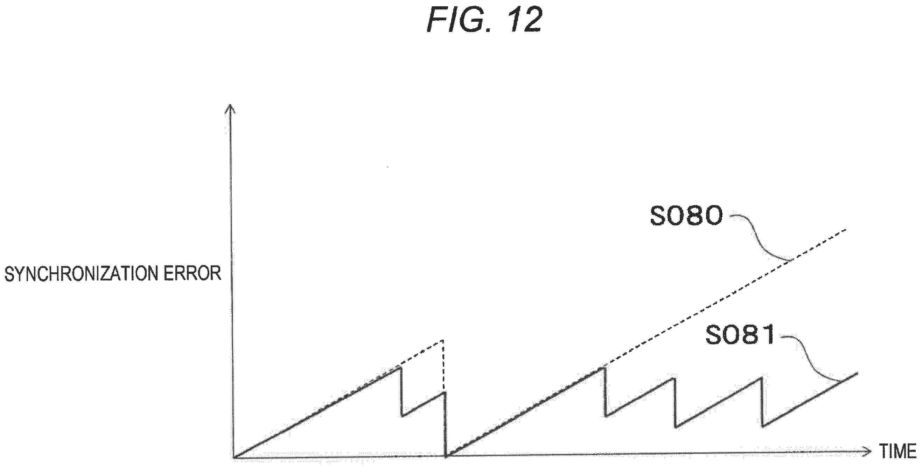

Effects of the present embodiment will be described with reference to FIG. 12.

A line (broken line) in S080 indicates a time-series change in the synchronization error when the time synchronization processing is performed in a case where the minimum value illustrated in FIG. 5 is measured. Meanwhile, a line (solid line) in S081 indicates a time-series change in the synchronization error when the time synchronization processing is performed by the method according to the present embodiment. The latter is a method of performing the time synchronization processing in a case where the delays of the egress path and the ingress path including the queuing delay are equal within a predetermined range.

In the case of S080, the synchronization is performed in a case where the time synchronization packet is communicated without queuing with other packets in the target network 122, and the opportunity of synchronization is limited. On the other hand, in the method of S081 in the present embodiment, the time synchronization processing can be performed even in a case where the delays of the egress path and the ingress path are substantially equal to each other as compared with a case where the delay is the minimum delay. That is, the number of synchronization opportunities can be increased as compared with the case of S080. Therefore, it is expected that the worst value of the synchronization error can be made lower than the case of S080.

Further, the application of the present embodiment to a portion of a ring network will be exemplified below. Examples of the ring network include IEC 62439 including High Availability Seamless Redundancy (HSR) and IEEE 802.17 Resilient Packet Ring (RPR).

[Effect]

The communication control apparatus 120 to which the present embodiment is applied executes the time synchronization processing in a case where the delays of the egress path and the ingress path are equal to each other within a predetermined range. As a result, the time synchronization processing can be realized on a multi-hop network without using the dedicated network relay device 121 of IEEE 1588. Therefore, a time synchronization system can be realized at low cost without making a new investment in the existing communication infrastructure. In addition, since the time synchronization can be realized on a multi-hop network, the range of the target control system can be physically expanded. That is, the existing wide-area communication system using the network relay device can be used as it is to perform processing for the time synchronization.

Embodiment 2

Embodiment 2 is an example in which a network is configured by mix of the network relay device 121 defined by the IEEE 1588 standard and the network relay device 121 that does not support the function of the IEEE 1588 standard (mixture with Transparent Clock). Note that reference numerals used in Embodiment 2 mean the same as the functions, elements, and the like described in Embodiment 1 unless otherwise specified.

The network relay device 121 defined by the IEEE 1588 standard indicates Boundary Clock (Hereinafter, referred to as BC) and Transparent Clock (Hereinafter, referred to as TC). TC includes End-to-end TC (E2E TC) and Peer-to-peer TC (P2P TC).

The BC is the network relay device 121 in which each communication port functions as the master or the slave in IEEE 1588. Whether -each communication port functions as the master or the slave depends on the operations defined by IEEE 1588 standard.

When each communication port becomes the slave function, the function of the present embodiment is executed. That is, in the communication of the time synchronization packet with the master, the time synchronization processing is executed when the communication delays of the egress path and the ingress path including the queuing delay in the network relay device 121 that does not support the IEEE 1588 standard are equal to each other within a predetermined range.

The E2E TC adds the transfer delay within the TC to a field called Correction_Field (Hereinafter, referred to as CF) of each time synchronization packet. The communication apparatus that has received the time synchronization packet can obtain the difference in the delay of egress path and ingress path using the communication information. In addition to the function of the E2E TC, the P2P TC measures a path delay with an adjacent P2P TC, and adds the path delay to the CF of the time synchronization packet in addition to the transfer delay.

A problem of the present embodiment is derived from the transfer delay generated on the network relay device 121 and that the transfer delay may be different between the egress path and the ingress path. Since the TC has the above-described function, the transfer delay in the TC (network relay device 121) is known in the egress path and the ingress path. Therefore, it is possible to compare the delays of the egress path and the ingress path by excluding the transfer delay.

This delay comparison will be described using the configuration illustrated in FIG. 1. For example, when the network relay device 121b is an E2E TC, a transfer delay in the network relay device 121b can be excluded. During the time synchronization processing between the communication control apparatus 120a and the communication apparatus 123, the network relay device 121b adds the transfer delay CFsync to the CF of the Sync message in the egress path (from the communication apparatus 123 to the communication control apparatus 120a). In the ingress path (from the communication control apparatus 120a to the communication apparatus 123), the transfer delay CFdreq is added to the CF of the Delay_Req message.

Upon receiving these time synchronization packets, the communication control apparatus 120a subtracts the master transmission time from the slave reception time (synchronization time) and then further subtracts CFsync, for example, in the transfer delay calculation on the egress path in S041 in FIG. 8. Then, in the transfer delay calculation in the ingress path in S052 of FIG. 9, after the transmission time (synchronization time) of the slave is subtracted from the reception time of the master, CFdreq is further subtracted. The delays of the egress path and the ingress path obtained in this way can be calculated excluding the network relay device 121b, and whether the delays are equal within a predetermined threshold range is then compared in S021 of FIG. 4. In this way, the comparison target can be limited to the network relay device 121 other than the TC, the delays can be compared more accurately, and the time synchronization processing can be performed with high accuracy. Note that since the CF is added and updated in IEEE 1588, it is not necessary to consider which network relay device 121 is the TC, and the value of the CF may be subtracted from the calculation delay of the egress path or the ingress path.

[Effect]

According to the present embodiment, by using TC, it is possible to perform time synchronization processing on the communication control apparatus 120 and the communication apparatus 123 by using the non-IEEE 1588 compliant network relay device 121 while enabling partial introduction of TC.

Embodiment 3

Embodiment 3 is an embodiment for controlling the communication traffic volume. That is, it is a process for correcting the deviation of the communication traffic volume of the network in a certain direction (egress path, ingress path) due to the delay difference. Note that reference numerals used in the present embodiment mean the same as the functions, elements, and the like described in Embodiment 1 and Embodiment 2 unless otherwise specified.

Since the main processing of Embodiment 3 corresponds to the processing of FIG. 4 of Embodiment 1, the description will be made by omitting the drawings and sharing FIG. 4. Furthermore, this processing is executed by the time synchronization control unit 130 and the communication unit 134.

First, the timing at which the time synchronization control unit 130 controls the communication traffic volume is determined (S120). In S120, processing similar to that in S020 of Embodiment 1 is performed. Next, the time synchronization control unit 130 determines whether to control the communication traffic volume (S121). The determination criterion as to whether to perform the control in S121 is similar to the processing in S021 of

Embodiment 1.

Next, the communication unit 134 controls the communication traffic volume (S122). S122 corresponds to Embodiment 1, and the contents thereof are as follows. A correspondence relationship between the difference between the delays of the egress path and the ingress path and the communication traffic volume to be increased is stored in advance, and communication packets (dummy) corresponding to the communication traffic volume corresponding to the calculated difference between the delays are communicated. Here, in a case where the delay of the egress path is smaller than the delay of the ingress path, the communication control apparatus 120 transmits a communication packet (dummy), and conversely, in a case where the delay of the egress path is larger than the delay of the ingress path, an instruction to transmit the communication packet (dummy) is sent from the communication control apparatus 120 to the communication apparatus 123. Furthermore, in this processing, communication packets (dummy) in a direction in which the communication traffic volume is smaller are communicated, that is, the communication traffic volume is increased, but the communication traffic volume in a direction in which the communication traffic volume is larger may be decreased. For example, by adjusting how the time advances using a timer to be described below, it is possible to reduce the communication interval by widening a communication interval.

This processing includes updating the parameter of the estimation equation of the communication traffic volume control, changing the synchronization time itself realized by a software timer or a hardware timer inside, and adjusting the advance of the time for a predetermined period in order to avoid a discontinuous time change. Note that, in the present embodiment, unlike the intentional communication flow of Embodiment 1, the communication traffic volume is reduced regardless of the delay difference.

According to the present embodiment, the deviation of the communication traffic volume can be corrected in the entire network.

Note that each of Embodiments also includes a technique of calculating not the delay itself but the communication times of the egress path and the ingress path and determining whether the differences are equal. Furthermore, application

**EP 3 968 562 A1**

to monitoring including abnormality detection in a power network is also possible.

Reference Signs List

101 CPU
102 LAN
108 memory
109 non-volatile storage medium
110 bus
120 communication control apparatus
121 network relay device
122 network
123 communication apparatus
130 time synchronization control unit
131 time synchronization unit
132 reference delay storage unit
133 timestamp unit
134 communication unit

**Claims**

1. A communication control apparatus that executes time synchronization processing with a communication apparatus connected via a network using a time synchronization packet transmitted and received via the network, the communication control apparatus comprising:

    a unit which transmits the time synchronization packet to the communication apparatus;
    a unit which receives the time synchronization packet from the communication apparatus;
    a unit which calculates a transmission/reception time of the time synchronization packet in the communication control apparatus and the communication apparatus using a timestamp recorded in the time synchronization packet;
    a unit which calculates a delay time, which is an elapsed communication time between the communication control apparatus and the communication apparatus, for each of an egress path and an ingress path using the specified transmission/reception time; and
    a unit which calculates a difference between the calculated delay time of the egress path and delay time of the ingress path, and when the calculated difference is less than or equal to a predetermined threshold value, executes time synchronization processing with a difference of averages of the transmission/reception times of the communication control apparatus and the communication apparatus as the delay time of the communication control apparatus using the timestamp.

2. The communication control apparatus according to claim 1, wherein the unit which executes the time synchronization processing periodically executes the time synchronization processing.

3. The communication control apparatus according to claim 2, wherein the unit which executes the time synchronization processing suppresses the time synchronization processing until a next cycle in a case where the calculated difference is larger than the predetermined threshold value.

4. The communication control apparatus according to claim 1, wherein the unit which receives the time synchronization packet receives a plurality of communication packets including the time synchronization packet, and
the unit which executes the time synchronization processing suppresses the time synchronization processing when a reception interval of each of the plurality of communication packets is substantially equal to a threshold value based on an inter-frame gap.

5. The communication control apparatus according to claim 1, further comprising a unit which increases a communication traffic volume according to the difference with respect to a path having a smaller delay time to be greater than a communication traffic volume of the other in a case where the difference is larger than the predetermined threshold value.

6. The communication control apparatus according to claim 1, wherein the unit which executes the time synchronization processing determines the predetermined threshold value on the basis of target synchronization accuracy in the time synchronization processing.

7. A communication control method for executing time synchronization processing between a communication control apparatus and a communication apparatus connected via a network using a time synchronization packet transmitted and received via the network,

wherein the communication control apparatus,
transmits the time synchronization packet to the communication apparatus,
receives the time synchronization packet from the communication apparatus,
specifies a transmission/reception time of the time synchronization packet in the communication control apparatus and the communication apparatus using a timestamp recorded in the time synchronization packet,
calculates a delay time, which is an elapsed time of communication between the communication control apparatus and the communication apparatus, for each of an egress path and an ingress path by using the specified transmission/reception time, and
calculates a difference between the calculated delay time of the egress path and delay time of the ingress path, and when the calculated difference is less than or equal to a predetermined threshold value, executes time synchronization processing with a difference of averages of the transmission/reception times of the communication control apparatus and the communication apparatus as the delay time of the communication control apparatus using the timestamp.

8. The communication control method according to claim 7, wherein
the communication control apparatus periodically executes the time synchronization processing.

9. The communication control method according to claim 8, wherein
the communication control apparatus suppresses the time synchronization processing until a next cycle in a case where the calculated difference is larger than the predetermined threshold value.

10. The communication control method according to claim 7, wherein
the communication control apparatus includes:

in the reception of the time synchronization packet, a plurality of communication packets including the time synchronization packet is received, and
when a reception interval of each of the plurality of communication packets is substantially equal to a threshold value based on an inter-frame gap, the time synchronization processing is suppressed.

11. The communication control method according to claim 7, wherein
the communication control apparatus increases a communication traffic volume according to the difference with respect to a path having a smaller delay time to be greater than a communication traffic volume of the other in a case where the difference is larger than the predetermined threshold value.

12. The communication control method according to claim 7, wherein
the communication control apparatus determines the predetermined threshold value on the basis of target synchronization accuracy in the time synchronization processing.

13. A communication control apparatus that executes time synchronization processing with a communication apparatus connected via a network using a time synchronization packet transmitted and received via the network, the communication control apparatus comprising:

a unit which transmits the time synchronization packet to the communication apparatus;
a unit which receives the time synchronization packet from the communication apparatus;
a unit which calculates a transmission/reception time of the time synchronization packet in the communication control apparatus and the communication apparatus using a timestamp recorded in the time synchronization packet;
a unit which calculates a delay time, which is an elapsed communication time between the communication control apparatus and the communication apparatus, for each of an egress path and an ingress path using the calculated transmission/reception time; and

a unit which calculates a difference between the calculated delay time of the egress path and delay time of the ingress path, and executes processing related to communication in the network in the communication control apparatus according to a value of the calculated difference.

14. The communication control apparatus according to claim 13, wherein the unit which executes the processing related to the communication suppresses a communication traffic volume of a path having a longer delay time in a case where the calculated difference is larger than a predetermined threshold value.

FIG. 1

FIG. 2

EP 3 968 562 A1

FIG. 3

# FIG. 4

START

DETERMINATION TIMING? —— N

S020

Y

S021

DETERMINE TO EXECUTE TIME SYNCHRONIZATION PROCESSING? —— N

S022

Y

EXECUTE TIME SYNCHRONIZATION PROCESSING

END

## FIG. 5

START

SO30 — TIMING TO CALCULATE DELAY? — N

Y

SO31 — CALCULATE DELAY

SO32 — IS REFERENCE DELAY HELD? — N

Y

SO33 — IS CALCULATED DELAY SMALLER THAN HELD DELAY? — N

Y

UPDATE REFERENCE DELAY — SO34

END

EP 3 968 562 A1

## FIG. 6

START

IS Sync MESSAGE RECEIVED? — S001

N

Y

RECORD RECEPTION TIME OF
Sync MESSAGE IN SLAVE — S002

ESTIMATE TRANSMISSION
TIME OF MASTER — S003

CALCULATE DIFFERENCE
BETWEEN RECEPTION TIME AND
TIMESTAMP OF Sync — S004

END

# FIG. 7

SO10 — TRANSMISSION TIMING OF Delay_Req MESSAGE?

SO11 — TRANSMIT Delay_Req MESSAGE

SO12 — RECORD TRANSMISSION TIME OF Delay_Req MESSAGE

IS Delay_Resp MESSAGE RECEIVED? — SO13 / N

Y

RECORD ESTIMATED RECEPTION TIME OF Delay_Req MESSAGE OF MASTER — SO14

CALCULATE DIFFERENCE BETWEEN RECEPTION TIME AND TIMESTAMP NOTIFIED BY Delay_Resp — SO15

END

EP 3 968 562 A1

# FIG. 8

```
              ┌──────────────┐
              │    START     │
              └──────┬───────┘
                     │
                     ▼
              ╱─────────────────╲          N
             ╱  IS Sync MESSAGE   ╲ ─────────┐
             ╲    RECEIVED?       ╱          │
              ╲─────────────────╱    ~S001   │
                     │ Y                      │
                     ▼                        │
        ┌────────────────────────┐           │
        │  RECORD RECEPTION TIME  │           │
        │  OF Sync MESSAGE IN     │  ~S002    │
        │        SLAVE           │           │
        └───────────┬────────────┘           │
                    ▼                         │
        ┌────────────────────────┐           │
        │  CONVERT Sync MESSAGE   │           │
        │  RECEPTION TIME IN      │  ~S040    │
        │  SLAVE INTO             │           │
        │  SYNCHRONIZATION TIME   │           │
        └───────────┬────────────┘           │
                    ▼                         │
        ┌────────────────────────┐           │
        │ CALCULATE COMMUNICATION │           │
        │ DELAY OF EGRESS PATH    │  ~S041    │
        └───────────┬────────────┘           │
                    ▼                         │
              ┌──────────────┐               │
              │    END       │               │
              └──────────────┘               │
```

## FIG. 9

SO10 — TRANSMISSION TIMING OF Delay_Req MESSAGE?

SO11 — TRANSMIT Delay_Req MESSAGE

SO12 — RECORD TRANSMISSION TIME OF Delay_Req MESSAGE

SO50 — CONVERT TRANSMISSION TIME OF Delay_Req MESSAGE INTO SYNCHRONIZATION TIME

IS Delay_Resp MESSAGE RECEIVED? — SO13

SO51 — RECORD RECEPTION TIME OF Delay_Req MESSAGE OF MASTER

SO52 — CALCULATE COMMUNICATION DELAY OF INGRESS PATH

START

END

EP 3 968 562 A1

## FIG. 10

MASTER   NETWORK   SLAVE

(1)
tm 1
10

(2)
ts 2
45

(3)
ts 3
105

(4)
tm 4
100
(5)

Delay_Resp
(tm4)

(6)

## FIG. 11

START

DELAY CALCULATION TIMING? — S070

N

Y

S071 — ESTIMATE MINIMUM DELAY FROM DISTRIBUTION MODEL

S072 — UPDATE REFERENCE DELAY

END

EP 3 968 562 A1

## FIG. 12

# FIG. 13

START

S090 — IS REFERENCE DELAY UPDATED?
N

Y

S091 — IS RECEPTION INTERNAL EQUAL TO PREDETERMINED VALUE?
Y

N

S092 — COMPLETE PREPARATION OF REFERENCE DELAY

END

## FIG. 14

```
                        START

S060    MASTER TRANSMIT                    SLAVE RECORD                    S065
        Sync MESSAGE TO SLAVE             TRANSMISSION TIME OF
                                          Delay_Req MESSAGE

S061    MASTER RECORD                      MASTER RECEIVE                   S066
        TRANSMISSION TIME                  Delay_Req MESSAGE AND
        OF Sync MESSAGE                    RECORD RECEPTION TIME

S062    SLAVE RECORD                       MASTER PUT RECEPTION            S067
        RECEPTION TIME OF                  TIME OF Delay_Req
        Sync MESSAGE                       MESSAGE TO Delay_Resp
                                           MESSAGE AND NOTIFY SLAVE

S063    MASTER NOTIFY SLAVE                SLAVE CALCULATE                 S068
        OF TRANSMISSION TIME               COMMUNICATION DELAY AND
        OF Sync MESSAGE                    DIFFERENCE OF TIME

S064    SLAVE TRANSMIT                          END
        Delay_Req
        MESSAGE TO MASTER
```

## FIG. 15

**EP 3 968 562 A1**

**INTERNATIONAL SEARCH REPORT**

| | International application No. |
|---|---|
| | PCT/JP2020/005572 |

A. CLASSIFICATION OF SUBJECT MATTER
Int. Cl. H04L7/00(2006.01)i, H04L12/70(2013.01)i
FI: H04L7/00 990, H04L12/70 100Z

According to International Patent Classification (IPC) or to both national classification and IPC

B. FIELDS SEARCHED

Minimum documentation searched (classification system followed by classification symbols)
Int. Cl. H04L7/00, H04L12/70

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)
IEEE Xplore

C. DOCUMENTS CONSIDERED TO BE RELEVANT

| Category* | Citation of document, with indication, where appropriate, of the relevant passages | Relevant to claim No. |
|---|---|---|
| A | JP 2018-155679 A (MEIDENSHA CORP.) 04 October 2018 | 1-14 |
| A | JP 2011-71735 A (MITSUBISHI ELECTRIC CORP.) 07 April 2011 | 1-14 |
| A | JP 2016-116143 A (MITSUBISHI ELECTRIC CORP.) 23 June 2016 | 1-14 |
| A | JP 2014-238357 A (SONY CORP.) 18 December 2014 | 1-14 |

☒ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03.04.2020 | 14.04.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

32

**INTERNATIONAL SEARCH REPORT**

| International application No. |
| --- |
| PCT/JP2020/005572 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | EXEL, Reinhard, Mitigation of Asymmetric Link Delays in IEEE 1588 Clock Synchronization Systems [online], IEEE Communications Letters, March 2014, Year 2014/vol. 18/ issue 3, pp. 507-510, Internet <URL: https://ieeexplore.ieee.org/stamp/stamp.jsp?tp=&arnumber=6784558> entire text, all drawings | 1-14 |
| A | 伊藤将志, 時刻同期のための通信遅延変動を軽減するメカニズムの明確化と検証, 電子情報通信学会技術研究報告, 13 September 2012, vol. 112, no. 209, pp. 33-38, entire text, all drawings (ITO, Masashi, KOZAKAI, Yasuyuki. The Clarification and Verification of The Mechanism Mitigating Packet Delay Variation for Time Synchronization. IEICE Technical Report.) | 1-14 |

Form PCT/ISA/210 (continuation of second sheet) (January 2015)

**INTERNATIONAL SEARCH REPORT**
Information on patent family members

International application No.

PCT/JP2020/005572

| Patent Documents referred to in the Report | Publication Date | Patent Family | Publication Date |
|---|---|---|---|
| JP 2018-155679 A | 04.10.2018 | (Family: none) | |
| JP 2011-71735 A | 07.04.2011 | (Family: none) | |
| JP 2016-116143 A | 23.06.2016 | (Family: none) | |
| JP 2014-238357 A | 18.12.2014 | US 2014/0362960 A1 CN 104243129 A | |

Form PCT/ISA/210 (patent family annex) (January 2015)

**REFERENCES CITED IN THE DESCRIPTION**

**Patent documents cited in the description**

- JP 2010074600 A

**Non-patent literature cited in the description**

- IEEE Standard for a Precision Clock Synchronization Protocol for Networked Measurement and Control Systems. *IEEE 1588 -2008*